(19) Europäisches Patentamt / European Patent Office / Office européen des brevets

(11) **EP 4 407 527 A1**

(12) **EUROPEAN PATENT APPLICATION**
published in accordance with Art. 153(4) EPC

(43) Date of publication:
**31.07.2024 Bulletin 2024/31**

(21) Application number: **21958417.4**

(22) Date of filing: **24.09.2021**

(51) International Patent Classification (IPC):
**G06N 20/00** (2019.01)

(52) Cooperative Patent Classification (CPC):
**G06N 20/00**

(86) International application number:
**PCT/JP2021/035124**

(87) International publication number:
**WO 2023/047542 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEC Corporation
108-8001 Tokyo (JP)**

(72) Inventor: **SAWADA, Azusa
Tokyo 108-8001 (JP)**

(74) Representative: **Betten & Resch
Patent- und Rechtsanwälte PartGmbB
Maximiliansplatz 14
80333 München (DE)**

(54) **LEARNING DEVICE**

(57) A learning device includes a learning means for learning a discriminative model that discriminates a class to which second data belongs, the second data being data corresponding to an unknown object, by using first training data that includes a group including a plurality of pieces of first data corresponding to the same object, and a first data label with respect to the group. The learning means computes a discrimination score with respect to the first data by using the discriminative model, and learns the discriminative model by using a loss weighted by a weight that depends on a relative height of the discrimination score in the group.

FIG. 14

EP 4 407 527 A1

## Description

TECHNICAL FIELD

The present invention relates to a learning device and a learning method for performing machine learning of an discriminative model that discriminates a class to which data belongs, and a storage medium.

BACKGROUND ART

A device and a method for inspecting presence or absence of a foreign object in the liquid enclosed in a transparent or translucent container has been proposed.

For example, Patent Literature 1 proposes a method and a device for inspecting whether or not a foreign object exists in the liquid by acquiring data representing the moving locus of an object in the liquid through observation, and comparing the acquired moving locus data with the moving locus data of the object in the liquid having been learned in advance.

CITATION LIST

PATENT LITERATURE

Patent Literature 1: JP 2019-174346 A

SUMMARY OF INVENTION

TECHNICAL PROBLEM

In the case of acquiring a moving locus of an object in the liquid, there is a case where a moving locus of the same object is observed in a fragmented manner. That is, when an object moves from a start point S to an end point E in an observation period, it is ideal that the entire moving locus from the start point S to the end point E is observed as a moving locus of the object. However, there is a case where a part of the moving locus is observed as moving locus data of the object, due to grounds such as a lens effect of the container, a loss of shadows of the object caused by illumination conditions, hide caused by shadows or other objects, a tracking failure caused by changes in the view of shadows of the object, and the like. For example, there is a case where a partial moving locus from the start point S to an intermediate point, a partial moving locus from the intermediate point to another intermediate point, and a partial moving locus from the intermediate point to the end point E are observed as moving locus data of the object. A phenomenon that a part of the entire moving locus is observed as if it was the entire moving locus, as described above, is called fragmentation of moving locus data.

However, learning a discriminative model by expecting such fragmentation has not been performed conventionally. Therefore, there is a problem that discrimination of fragmented data is difficult. Such a problem occurs in the entire discriminative models that receive data as input and discriminate the data class, without being limited to the case of a discriminative model that discriminates the class of an object from the moving locus of an object in the liquid.

An object of the present invention is to provide a learning device that solves the above-described problem.

SOLUTION TO PROBLEM

A learning device, according to one aspect of the present invention, is configured to include
a learning means for learning a discriminative model that discriminates a class to which second data belongs, the second data being data corresponding to an unknown object, by using first training data that includes a group including a plurality of pieces of first data corresponding to the same object, and a first data label with respect to the group.

The learning means is configured to compute a discrimination score with respect to the first data by using the discriminative model, and learns the discriminative model by using a loss weighted by a weight that depends on a relative height of the discrimination score in the group.

Further, a learning method, according to another aspect of the present invention, is configured to include learning a discriminative model that discriminates a class to which second data belongs, the second data being data corresponding to an unknown object, by using first training data that includes a group including a plurality of pieces of first data corresponding to the same object, and a first data label with respect to the group.

The learning is configured to include

computing a discrimination score with respect to the first data by using the discriminative model,
computing a weight that depends on a relative height of the discrimination score in the group,
computing a loss weighted by using the computed weight, and
learning the discriminative model by using the weighted loss.

Further, a computer-readable medium, according to another aspect of the present invention, is configured to store thereon a program for causing a computer to execute processing to
learn a discriminative model that discriminates a class to which second data belongs, the second data being data corresponding to an unknown object, by using first training data that includes a group including a plurality of pieces of first data corresponding to the same object, and a first data label with respect to the group.

The learning is configured to includes processing to:

compute a discrimination score with respect to the first data by using the discriminative model;

compute a weight that depends on a relative height of the discrimination score in the group,

compute a loss weighted by using the computed weight, and

learn the discriminative model by using the weighted loss.

ADVANTAGEOUS EFFECTS OF INVENTION

With the configurations described above, the present invention can gain a discriminative model that is resistant to fragmentation and is less likely to generate erroneous discrimination with a high score.

BRIEF DESCRIPTION OF DRAWINGS

[Fig. 1] Fig. 1 is a block diagram of an inspection system to which a learning device according to a first example embodiment of the present invention is applied.

[Fig. 2] Fig. 2 is a block diagram illustrating an example of an inspection device according to the first example embodiment of the present invention.

[Fig. 3] Fig. 3 illustrates an example of a configuration of image information according to the first example embodiment of the present invention.

[Fig. 4] Fig. 4 illustrates an example of a configuration of tracking information according to the first example embodiment of the present invention.

[Fig. 5] Fig. 5 illustrates an example of a configuration of inspection result information according to the first example embodiment of the present invention.

[Fig. 6] Fig. 6 is a flowchart illustrating an example of operation of a learning phase according to the first example embodiment of the present invention.

[Fig. 7] Fig. 7 is a flowchart illustrating an example of operation in an inspection phase according to the first example embodiment of the present invention.

[Fig. 8] Fig. 8 illustrates an example of a configuration of two types of training data to be used for machine learning of an discriminative model in the first example embodiment of the present invention.

[Fig. 9] Fig. 9 is a schematic diagram illustrating an example of a method of creating training data 251 from training data 250 by a discriminative model learning unit in the first example embodiment of the present invention.

[Fig. 10] Fig. 10 is a flowchart illustrating an example of a learning process performed by the discriminative model learning unit according to the first example embodiment of the present invention.

[Fig. 11] Fig. 11 illustrates expressions to be used in the first example embodiment of the present invention.

[Fig. 12] Fig. 12 is a flowchart illustrating an example of processing performed by a determination unit according to the first example embodiment of the present invention.

[Fig. 13] Fig. 13 schematically illustrates examples of moving loci of floating objects to be used as training data in the first example embodiment of the present invention.

[Fig. 14] Fig. 14 is a block diagram of a learning device according to a second example embodiment of the present invention.

DESCRIPTION OF EMBODIMENTS

[First Example Embodiment]

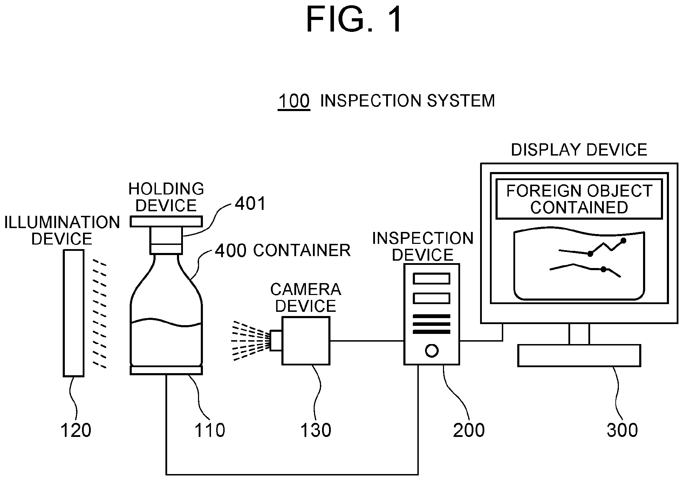

Fig. 1 is a block diagram of an inspection system 100 to which a learning device according to a first example embodiment of the present invention is applied. Referring to Fig. 1, the inspection system 100 is a system for inspecting presence/absence of a foreign object in the liquid enclosed in a container 400. The inspection system 100 includes a holding device 110, an illumination device 120, a camera device 130, an inspection device 200, and a display device 300, as main constituent elements.

The container 400 is a transparent or translucent container such as a glass bottle or a pet bottle. The container 400 is filled with liquid such as pharmaceutical preparations or water that is enclosed inside thereof. The liquid enclosed in the container 400 has a possibility that a foreign object is mixed. As a foreign object, for example, a glass piece, a plastic piece, a rubber piece, hair, a fabric piece, or the like is assumed.

The holding device 110 is configured to hold the container 400 in a predetermined posture. Any posture is acceptable as a predetermined posture. For example, a posture when the container 400 is in an upright state may be set as a predetermined posture. Alternatively, a posture when the container 400 is tilted by a predetermined angle from the upright posture may be set as a predetermined posture. Hereinafter, description will be given under the assumption that a predetermined posture is an upright posture of the container 400. Any mechanism may be used to hold the container 400 in an upright posture. For example, the holding mechanism may be configured to include a pedestal on which the container 400 is placed in an upright posture, a member that presses a top surface of a cap 401 that is a vertex portion of the container 400 placed on the table, and the like.

Further, the holding device 110 is configured to, in a state of holding the container 400, tilt the container 400 in a predetermined direction from the upright posture, or swing it, or rotate it. Any mechanism may be used for tilting, swinging, or rotating the container 400. For example, the mechanism of tilting, swinging, or rotating may be configured to include a motor that tilts, swings, or rotates the entire holding mechanism in a state of holding the container 400.

The holding device 110 is connected with the inspection device 200 in a wired or wireless manner. When the holding device 110 is activated by an instruction from the inspection device 200, the holding device 110 tilts, swings, or rotates the container 400 from the upright posture in a state of holding the container 400. Moreover, when the holding device 110 is stopped by an instruction from the inspection device 200, the holding device 110 stops operation to tilt, swing, or rotate the container 400, and restore to a state of holding the container 400 in the upright posture.

When the container 400 is tilted, swung, or rotated as described and then allowed to be in a stationary state, a condition that the liquid flows in the stationary container 400 due to inertia is obtained. When the liquid flows, a condition that a foreign object mixed in the liquid is floating is obtained. Moreover, when the liquid flows, bubbles attached to the inner wall surface of the container 400 or bubbles mixed in the process that the liquid flows may float in the liquid. Accordingly, the inspection device 200 needs to identify whether the floating object is a foreign object or a bubble.

The illumination device 120 is configured to irradiate the liquid enclosed in the container 400 with illumination light. For example, the illumination device 120 is a surface light source in a size corresponding to the size of the container 400. The illumination device 120 is disposed on the side opposite to the side where the camera device 130 is disposed when viewed from the container 400. That is, illumination provided by the illumination device 120 is transparent illumination. However, the position of the illumination device 120 is not limited to this. For example, it may be provided on the bottom surface side of the container 400 or provided at a position adjacent to the camera device 130 and used as reflection light illumination for imaging.

The camera device 130 is an imaging device that continuously images the liquid in the container 400 at a predetermined frame rate, from a predetermined position on the side opposite to the side where the illumination device 120 is provided when viewed from the container 400. The camera device 130 may be configured to include a color camera equipped with a chargecoupled device (CCD) image sensor or a complementary MOS (CMOS) image sensor having a pixel capacity of about several millions pixels. The camera device 130 is connected with the inspection device 200 in a wired or wireless manner. The camera device 130 is configured to transmit, to the inspection device 200, time-series images captured by imaging, together with information indicating the captured time and the like.

The display device 300 is a display device such as a liquid crystal display (LCD). The display device 300 is connected with the inspection device 200 in a wired or wireless manner. The display device 300 is configured to display inspection results and the like of the container 400 performed by the inspection device 200.

The inspection device 200 is an information processing device that performs image processing on time-series images captured with the camera device 130, and inspects presence or absence of a foreign object in the liquid enclosed in the container 400. The inspection device 200 is connected with the holding device 110, the camera device 130, and the display device 300 in a wired or wireless manner.

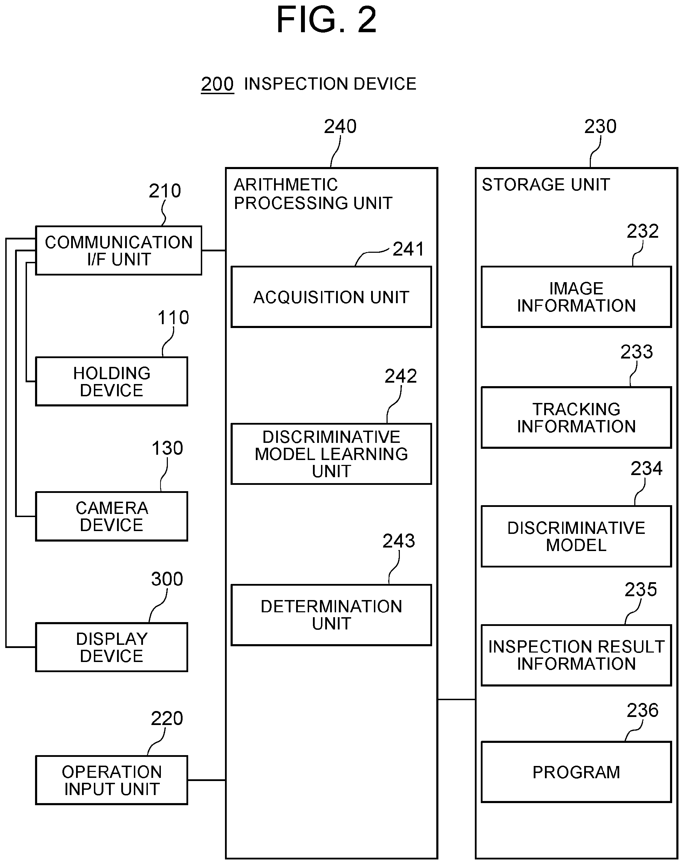

Fig. 2 is a block diagram illustrating an example of the inspection device 200. Referring to Fig. 2, the inspection device 200 includes a communication I/F unit 210, an operation input unit 220, a storage unit 230, and an arithmetic processing unit 240.

The communication I/F unit 210 is configured of a data communication circuit, and is configured to perform data communication with the holding device 110, the camera device 130, the display device 300, and other external devices, not illustrated, in a wired or wireless manner. The operation input unit 220 is configured of operation input devices such as a keyboard and a mouse, and is configured to detect operation by an operator and output it to the arithmetic processing unit 240.

The storage unit 230 is configured of one or more storage devices of one or a plurality of types such as a hard disk and a memory, and is configured to store therein processing information and a program 231 necessary for various types of processing performed in the arithmetic processing unit 240. The program 231 is a program for implementing various processing units by being read and executed by the arithmetic processing unit 240, and is read in advance from an external device or a storage medium via a data input-output function of the communication I/F unit 210 and is stored in the storage unit 230. The main processing information to be stored in the storage unit 230 includes image information 232, tracking information 233, a discriminative model 234, and inspection result information 235.

The image information 232 includes time-series images obtained by sequentially capturing the liquid in the container 400 with the camera device 130. In the case where a floating object exists in the liquid in the container 400, an image of the floating object is shown in the image information 232.

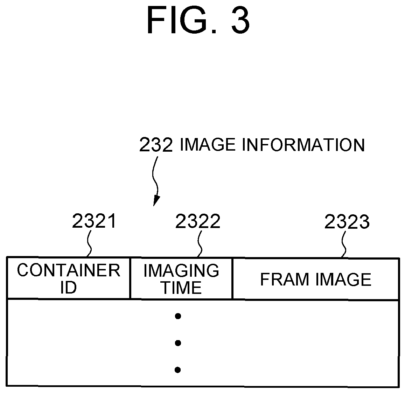

Fig. 3 illustrates an example of a configuration of the image information 232. The image information 232 of this example is configured of an entry consisting of a set of a container ID 2321, imaging time 2322, and a frame image 2323. In the field of the container ID 2321, an ID uniquely identifying the container 400 is set. As the container ID 2321, a serial number assigned to the container 400, a barcode attached to the container 400, object fingerprint information taken from the cap 401 of the container 400, or the like may be used. In the fields of the imaging time 2322 and the frame image 2323, the imaging time and a frame image are set, respectively. The imaging time 2322 is set to have precision (for example, millisecond units) with which a frame image can be discriminated while being distinguished from other frame images having the same container ID. As the imaging time 2322, an elapsed time from the point of time at which tilt, swing, or rotation of the container 400 is stopped may be used, for example. In the example of Fig. 3, the container ID 2321 is associated with each frame image 2323. However, the container ID 2321 may be associated with each group consisting of a plurality of frame images 2323.

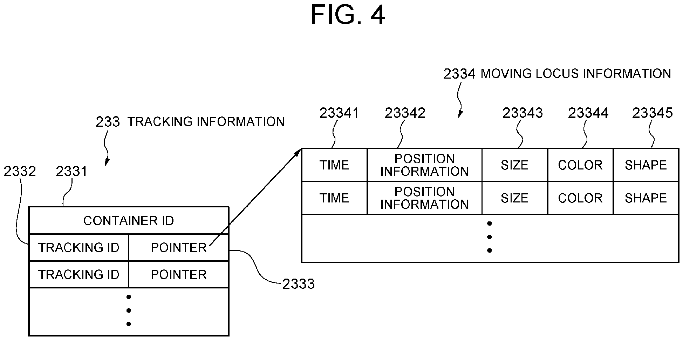

The tracking information 233 includes time-series data representing the moving locus of a floating object that is obtained by detecting and tracking an image of the floating object existing in the liquid in the container 400 shown in the image information 232. Fig. 4 illustrates an example of a configuration of the tracking information 233. The tracking information 233 of this example is configured of entries of a container ID 2331 and a set of a tracking ID 2332 and a pointer 2333. In the entry of the container ID 2331, an ID uniquely identifying the container 400 is set. The entry consisting of a set of the tracking ID 2332 and the pointer 2333 is set for each floating object to be tracked. In the tracking ID 2332 field, an ID for discriminating the floating object to be tracked from another floating object in the same container 400 is set. In the pointer 2333 field, a pointer to the moving locus information 2334 of the floating object to be tracked is set.

The moving locus information 2334 is configured of an entry consisting of time 23341, position information 23342, size 23343, color 23344, and shape 23345. In the fields of the time 23341, the position information 23342, the size 23343, the color 23344, and the shape 23345, the imaging time, coordinate values of the floating object to be tracked at the imaging time, the size of the floating object, the color of the floating object, and the shape of the floating object are set. As the imaging time set in the time 23341, the imaging time 2322 of the frame image is used. The coordinate values may be, for example, coordinate values in a predetermined coordinate system. A predetermined coordinate system may be a camera coordinate system viewed with the camera being the center, or a world coordinate system in which a position in a space is considered as the center. The entries of the moving locus information 2334 are aligned in the order of the time 23341. The time 23341 of the top entry is tracking start time. The time 23341 of the last entry is tracking end time. The time 23341 of an entry other than the top and the last is tracking intermediate time.

The discriminative model 234 is a model for estimating the type (class) of a floating object from time-series data representing the moving locus of the floating object. The number of discrimination classes is assumed to be N. N represents 2 or 3 or more positive integer. For example, when N = 2, the discriminative model 234 outputs a probability that the floating object is in a foreign object class, for example. When N = 3, the discriminative model 234 outputs probabilities for three classes, that is, a probability that the floating object is in a foreign object class, a probability that it is in a bubble class, and a probability that it is in a noise class. A probability of each class is output from the discriminative model 234 as, for example, a softmax value. The discriminative model 234 may be configured to use a recursive structure of a neural network such as RNN or LSTM, for example. Alternatively, the discriminative model 234 may return to discrimination of fixed length data by using padding, pooling process, or resize.

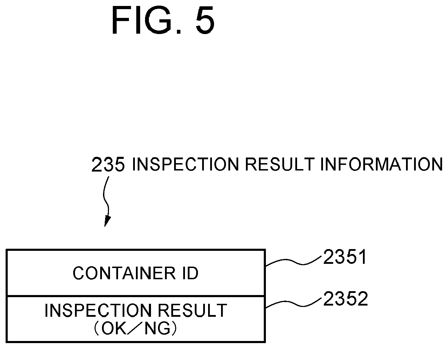

The inspection result information 235 is information about a result of inspecting presence or absence of a foreign object in the liquid enclosed in the container 400 to be inspected. Fig. 5 illustrates an example of a configuration of the inspection result information 235. The inspection result information 235 of this example is configured of a set of a container ID 2351 and an inspection result 2352. In the entry of the container ID 2351, an ID uniquely identifying the container 400 to be inspected is set. In the entry of the inspection result 2352, an inspection result of either OK (inspection pass) or NG (inspection failure) is set. The inspection result of NG is output when, among all floating objects detected in the liquid enclosed in the container 400 specified with the container ID, at least one of them is determined to be in a foreign object class with a probability that is equal to or larger than a predetermined value.

Referring to Fig. 2 again, the arithmetic processing unit 240 includes a microprocessor such as an MPU and peripheral circuits thereof, and is configured to read and execute the program 231 from the storage unit 230 to allow the hardware and the program 231 to cooperate with each other to thereby implement the various processing units. The main processing units implemented by the arithmetic processing unit 240 include an acquisition unit 241, a discriminative model learning unit 242, and a determination unit 243.

The acquisition unit 241 is configured to acquire the image information 232 showing an image of a floating object existing in the liquid enclosed in the container 400 by controlling the holding device 110 and the camera device 130. The acquisition unit 241 is also configured to acquire the tracking information 233 including time-series data representing the moving locus of the floating object by analyzing the image information 232.

The discriminative model learning unit 242 is configured to generate training data to be used for learning of the discriminative model 234. The discriminative model learning unit 242 is also configured to learn the discriminative model 234 by using the generated training data.

The determination unit 243 is configured to estimate the class of a floating object from time-series data representing the moving locus of the floating object in the liquid enclosed in the container 400 to be inspected acquired by the acquisition unit 241, by using the learned discriminative model 234. The determination unit 243 is also configured to create the inspection result information 235 representing whether or not a foreign object is mixed in the container 400 to be inspected, on the basis of the estimation result.

Next, operation of the inspection system 100 will be described. The phases of the inspection system 100 are largely classified into a learning phase and an inspection phase. A learning phase is a phase to learn the discriminative model 234 by machine learning. An inspection phase is a phase to inspect presence or absence of a foreign object in the liquid enclosed in the container 400 to be inspected, by using the learned discriminative model 234.

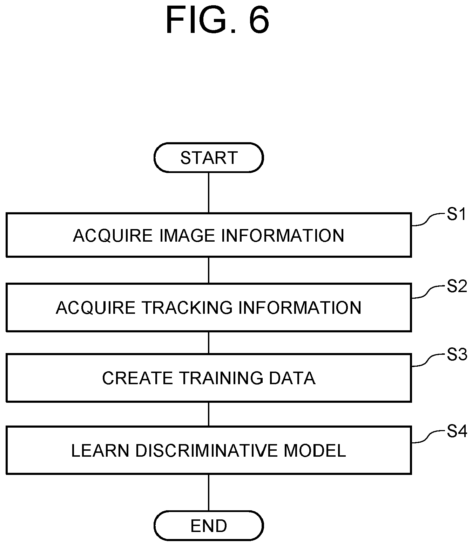

Fig. 6 is a flowchart showing an example of operation in the learning phase. Referring to Fig. 6, first, the acquisition unit 241 acquires the image information 232 showing an image of a floating object existing in the liquid enclosed in the container 400 by controlling the holding device 110 and the camera device 130 (step S1). Then, the acquisition unit 241 acquires the tracking information 233 including time-series data representing the moving locus of the floating object by analyzing the image information 232 (step S2).

Next, the discriminative model learning unit 242 creates training data to be used for machine learning of the discriminative model 234 (step S3). Then, the discriminative model learning unit 242 performs machine learning of the discriminative model 234 in which the time-series data representing the moving locus of the floating object is an input and the class of the floating object is an output, by using the created training data, and creates a learned discriminative model (step S4). The discriminative model 234 becomes a learned discriminative model when the learning phase ends.

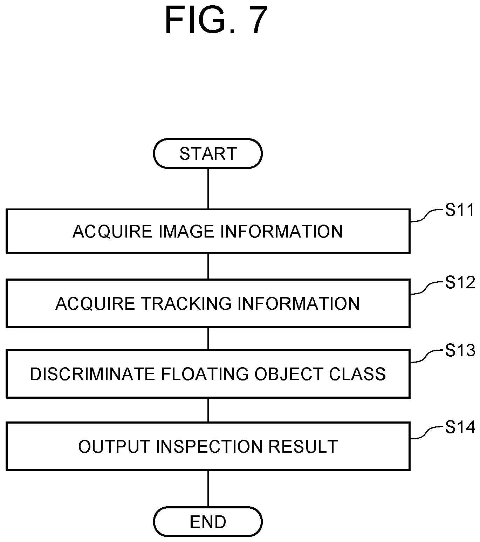

Fig. 7 is a flowchart illustrating an example of operation in the inspection phase. Referring to Fig. 7, first, the acquisition unit 241 acquires the image information 232 showing an image of a floating object existing in the liquid enclosed in the container 400 to be inspected, by controlling the holding device 110 and the camera device 130 (step S11). Then, the acquisition unit 241 acquires the tracking information 233 including time-series data representing the moving locus of the floating object by analyzing the image information 232 (step S12).

Then, the determination unit 243 estimates the class of the floating object from the time-series data representing the moving locus of the floating object included in the tracking information 233, by using the learned discriminative model 234 (step S13). Then, the determination unit 243 creates the inspection result information 236 on the basis of the estimated class of the floating object (step S14).

Next, the acquisition unit 241, the discriminative model learning unit 242, and the determination unit 243 will be described in detail.

First, the acquisition unit 241 will be described in detail.

First, the acquisition unit 241 tilts, swings, or rotates the container 400 to be inspected by activating the holding device 110 holding the container 400 in an upright posture. Then, when a certain period of time has elapsed from the activation, the acquisition unit 241 stops the holding device 110 to allow the container 400 to be in a stationary state in a predetermined posture. By allowing the container 400 to be in a stationary state after tilting, swinging, or rotating it a certain period of time as described above, a condition that liquid flows in the stationary container 400 due to inertia is obtained. Then, under the transparent illumination by the illumination device 120, the acquisition unit 241 starts operation to continuously image the liquid in the container 400 with the camera device 130 at a predetermined frame rate. That is, assuming that the time at which the container 400 becomes a stationary state after the tilt, swing, or rotation is time Ts, the acquisition unit 241 starts the imaging operation from the time Ts.

The acquisition unit 241 continues imaging of the liquid in the container 400 continuously with the camera device 130 by a time Te at which a predetermined period of time Tw elapses from the time Ts. The predetermined period of time Tw may be set to, assuming that all floating objects floating in the liquid are bubbles, at least a period of time required for obtaining a moving locus in which all bubbles move toward the upper side of the container 400 and it is not conceivable that they move downward (hereinafter referred to as a minimum imaging time length). The minimum imaging time length may be determined by experiments or the like in advance and fixedly set in the acquisition unit 241. Note that the acquisition unit 241 may immediately stop imaging with the camera device 130 when the period of time reaches the time Te, or may continue imaging with the camera device 130 thereafter.

The acquisition unit 241 adds the imaging time and a container ID to each of the time-series frame images acquired from the camera device 130, and stores them in the storage unit 230 as the image information 232.

Then, when the time-series frame images for the predetermined time length are acquired, the acquisition unit 241 detects a shadow of a floating object in the liquid in the container 400 from each of the frame images. For example, the acquisition unit 241 detects a shadow of a floating object in the liquid by a method as described below. However, the acquisition unit 241 may detect a shadow of a floating object in the liquid by a method other than that described below.

First, the acquisition unit 241 binarizes each of the frame images to create a binary frame image. Then, the acquisition unit 241 detects a shadow of a floating object from each binary frame image as described below.

The acquisition unit 241 first uses a binary frame image from which a shadow of a floating object is to be detected, as a focused binary frame image. Then, the acquisition unit 241 creates a difference image between the focused binary frame image and a binary frame image whose imaging time is late by $\Delta t$. Here, $\Delta t$ is set to a time at which the same floating objects partially overlap in the two images or appear at close proximate positions although not overlapping. Therefore, the time difference Δt is set according to the nature of the liquid or the foreign object, the floating state, or the like. In the difference image, the image portions that match each other in the two binary frame images are deleted, and only different image portions remain. Therefore, the contours or scratches of the container 400 that appear at the same positions in the two binary frame images are deleted, and only a shadow of a floating object appear. The acquisition unit 241 detects a shadow of the focused binary frame image corresponding to the portion where a shadow appears in the difference image, as a shadow of a floating object existing in the focused binary frame image.

The acquisition unit 241 tracks the detected floating object in the time-series images, and creates the tracking information 233 according to the tracking result. First, the acquisition unit 241 initializes the tracking information 233. In the initialization, a container ID of the container 400 is set in the entry of the container ID 2331 in Fig. 4. Then, the acquisition unit 241 tracks the floating object in the time-series images, and according to the tracking result, creates the entry of a set of the tracking ID 2332 and the pointer 2333 in Fig. 4 and the moving locus information 2334 for each floating object, by the method as described below.

First, the acquisition unit 241 focuses on a binary frame image whose imaging time is the oldest in the time-series binary frame images created as described above. Then, for each floating object detected in the focused binary frame image, the acquisition unit 241 assigns a unique tracking ID. Then, for each detected floating object, the acquisition unit 241 sets a tracking ID assigned to the detected floating object in the focused binary frame image in the tracking ID 2332 field in Fig. 4, sets the imaging time of the focused binary frame image in the time 23341 field in the top entry of the moving locus information 2334 indicated by the corresponding pointer 2333, and sets the coordinate values, the size, the color, and the shape of the floating object in the focused binary frame image in the fields for the position information 23342, the size 23343, the color 23344, and the shape 23345.

Then, the acquisition unit 241 moves the focus to a binary frame image that is one frame behind the focused binary frame image. Then, the acquisition unit 241 focuses on a floating object detected in the focused binary frame image. Then, the acquisition unit 241 compares the position of the focused floating object with the position of the floating object detected in the binary frame image that is one frame before it (hereinafter referred to as a previous binary frame image). When there is a floating object within a predetermined threshold distance from the focused floating object, the acquisition unit 241 determines that the focused floating object and the floating object existing within the threshold distance are the same floating object. In that case, the acquisition unit 241 assigns, to the focused floating object, the tracking ID having assigned to the floating object determined to be the same floating object. Then, the acquisition unit 241 secures a new entry in the moving locus information 2334 indicated by the pointer 2333 in the entry of the tracking information 233 in which the assigned tracking ID 2332 is set, and sets the imaging time of the focused binary frame image and the coordinate values, the size, the color, and the shape of the focused floating object, in the time 23341, the position information 23342, the size 23343, the color 23344, and the shape 23345 of the secured entry.

On the other hand, when there is no floating object within the threshold distance from the focused floating object in the previous binary frame image, the acquisition unit 241 determines that the focused floating object is a new floating object, and assigns a new tracking ID. Then, the acquisition unit 241 sets the tracking ID assigned to the focused floating object in the tracking ID 2332 field in Fig. 4 of the newly secured entry, sets the imaging time of the focused binary frame image in the time 23341 field in the top entry of the moving locus information 2334 indicated by the corresponding pointer 2333, and sets the coordinate values, the size, the color, and the shape of the focused floating object in the fields for the position information 23342, the size 23343, the color 23344, and the shape 23345.

Upon completion of the processing for the focused floating object, the acquisition unit 241 moves the focus to the next floating object detected in the focused binary frame image, and repeats the same processing as that described above. Then, upon completion of focusing on all floating objects detected in the focused binary frame image, the acquisition unit 241 moves the focus to a frame image that is one frame behind, and repeats the same processing as that described above. Then, upon completion of focusing up to the last frame image in the image information 232, the acquisition unit 241 ends the tracking process.

In the above description, the acquisition unit 241 performs tracking based on the distance between the floating objects in the adjacent two frame images. However, the acquisition unit 241 may perform tracking based on the distance between the floating objects in two frame images adjacent to each other with n frames (n is 1 or larger positive integer) being interposed between them. Moreover, the acquisition unit 241 may perform tracking by comprehensively determining a tracking result obtained by performing tracking based on the distance between the floating objects in two frame images adjacent to each other with m (m is 0 or larger positive integer) frames being interposed between them, and a tracking result obtained by performing tracking based on the distance between the floating objects in two images adjacent to each other with m+j frames (j is 1 or larger positive integer) being interposed between them.

Next, the discriminative model learning unit 242 will be described in detail.

First, training data to be used for machine learning of the discriminative model 234 will be described.

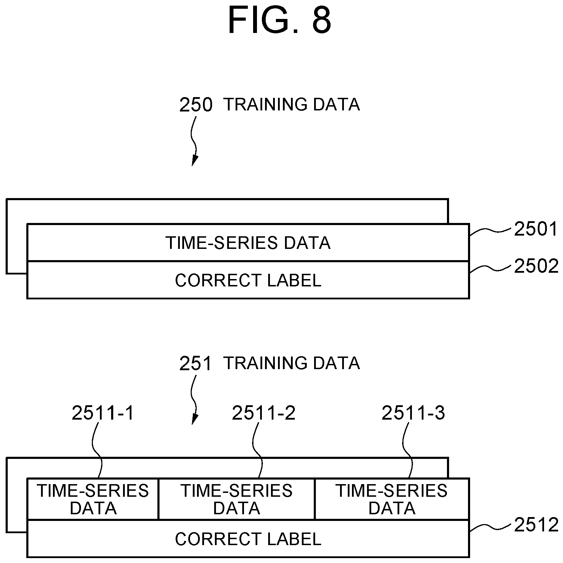

Fig. 8 illustrates an example of a configuration of two types of training data to be used for machine learning of the discriminative model 234. Referring to Fig. 8, a first type of training data 250 is configured to include single time-series data 2501 representing the moving locus of a floating object, and a correct label 2502 representing the class of the floating object. As the time-series data 2501, for example, the moving locus information 2334 illustrated in Fig. 4 may be used. Alternatively, the time-series data 2501 may be, for example, residual information in which one, two, or all of the size 23343, the color 23344, and the shape 23345 are deleted from the moving locus information 2334 illustrated in Fig. 4. The correct label 2502 represents a class to which a floating object corresponding to the time-series data 2501 belongs. For example, the correct label 2502 may be expressed in one-of-k method in which 1 class is assigned to each vector element, and only vector element of the correct class is assigned with 1 and the others are assigned with 0. The training data 250 may be created by interactive processing with a user, for example. For example, the discriminative model learning unit 242 displays the moving locus information 2334 acquired by the acquisition unit 241 on a screen of the display device 300, and receives a correct label of the moving locus information 2334 from the user via the operation input unit 220. Then, the discriminative model learning unit 242 creates a set of the displayed moving locus information 2334 and the received correct label as one piece of training data 250. The discriminative model learning unit 242 creates the required number of pieces of training data 250 for each discrimination class, by the same method. However, the method of creating the training data 250 is not limited to that described above.

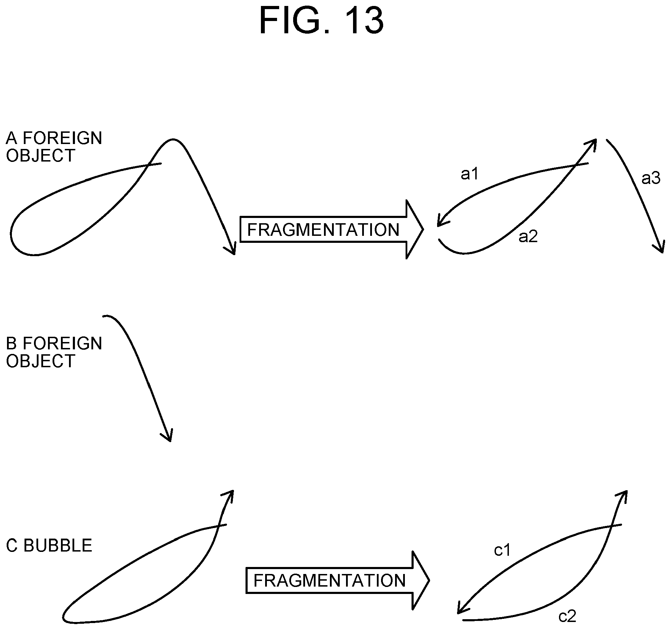

Moving loci A, B, and C illustrated in Fig. 13 schematically illustrate examples of floating objects represented by the moving locus information 2334 constituting the training data 250. In Fig. 13, the moving loci A and B are made by foreign objects, and the moving locus C is made by a bubble. In the moving locus A of a foreign object, although it moves upward by being affected by the flow of the liquid in a partial section, the foreign object having a larger specific gravity than that of the liquid finally drops. In the moving locus B of a foreign object, it does not move upward even once and shows a tendency of dropping from the beginning of tracking. On the other hand, in the moving locus C of a bubble, although it moves downward by being affected by the flow of the liquid in a partial section, it finally moves upward.

Referring to Fig. 8 again, the second type of training data 251 is configured to include a plurality of pieces of time-series data 2511-i (i = 1, 2, ...) corresponding to the same floating object, and a correct label 2512 representing the class of the floating object. Such training data 251 may be mechanically created from the first type of training data 250, for example.

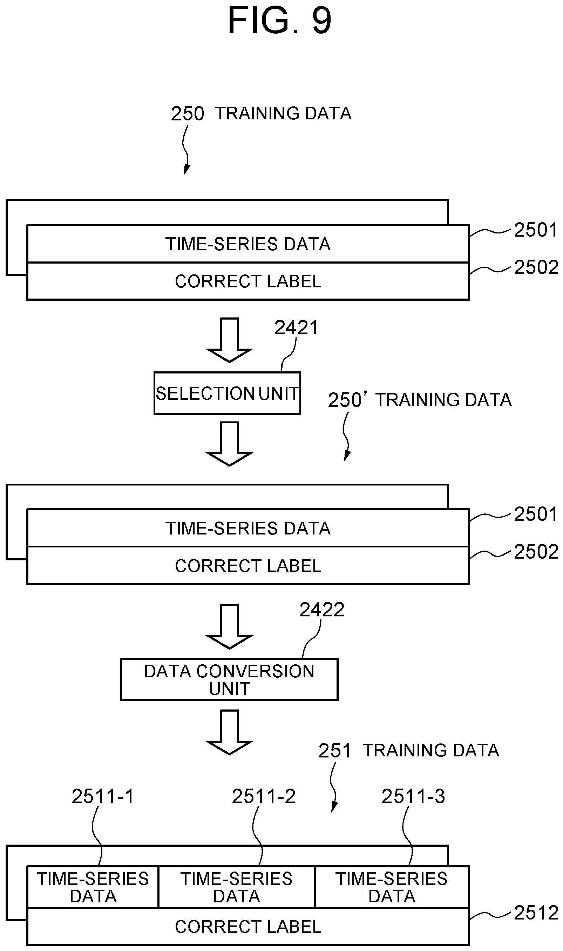

Fig. 9 is a schematic diagram illustrating an example of a method of creating the training data 251 from the training data 250 by the discriminative model learning unit 242. Referring to Fig. 9, the discriminative model learning unit 242 is configured to include a selection unit 2421 and a data conversion unit 2422. First, the discriminative model learning unit 242 selects one or the required number of pieces of training data 250' configured to include the time-series data 2501 representing the moving locus of a foreign object and the correct label 2502, from a plurality of pieces of training data 250 described with reference to Fig. 8, by using the selection unit 2421. For example, when the correct label 2502 includes vector elements of three classes, namely a foreign object class, a bubble class, and a noise class, the training data 250' becomes training data including the correct label 2502 in which a value 1 is set to the foreign object class. However, in addition to the training data including the time-series data 2501 representing the moving locus of a foreign object, it is also possible to select training data including the time-series data 2501 representing a moving locus of an object other than a foreign object from the training data 250, and include it in the training data 250'.

Then, the discriminative model learning unit 242 generates one piece of training data 251 configured to include a plurality of pieces of time-series data 2511-i and the correct label 2512, from the respective pieces of training data 250' by using the data conversion unit 2422. Specifically, the discriminative model learning unit 242 computes two intermediate times, that is, time Mt1 and time Mt2, that divide the period of time from the tracking start time St until the tracking end time Et of the time-series data 2501 of the training data 250 into three equal parts. Then, the discriminative model learning unit 242 extracts all entries including the time 23341 from the tracking start time St to the intermediate time Mt1, from the moving locus information 2334 constituting the time-series data 2501, and generates time-series data configured of the entries acquired by the extraction as first time-series data 2511-1. Then, the discriminative model learning unit 242 extracts all entries including the time 23341 from the intermediate time Mt1 to the intermediate time Mt2, from the moving locus information 2334 constituting the time-series data 2501, and generates time-series data configured of the entries acquired by the extraction as second time-series data 2511-2. Then, the discriminative model learning unit 242 extracts all entries including the time 23341 from the intermediate time Mt2 to the tracking end time Et, from the moving locus information 2334 constituting the time-series data 2501, and generates time-series data configured of the entries acquired by the extraction as third time-series data 2511-3. Further, the discriminative model learning unit 242 generates the correct label 2502 of the training data 250' as the correct label 2512 of the training data 251 as it is.

Moving loci a1, a2, and a3 illustrated in Fig. 13 schematically illustrate examples of moving loci of a foreign object represented by the three pieces of time-series data 2511-1, 2511-2, and 2511-3 constituting the training data 251. The training data 251 is one generated from the training data 250 representing the moving locus A of the foreign object illustrated in Fig. 13. Referring to Fig. 13, the moving locus a1 of the foreign object drops relatively gradually. The moving locus a2 of the foreign object rises relatively gradually. The moving locus a3 of the foreign object drops drastically.

However, the method of generating the training data 250' is not limited to that described above. For example, it is possible to create one piece of training data 251 from two pieces or four or more pieces of partial time-series data 2511 obtained by dividing the time-series data 2501 by 2 or 4 or larger positive integer. Further, the number of time-series data 2511 is not necessarily the same in all training data 251, but may be different. That is, the training data 251 including two pieces of time-series data 2511-1 and 2511-2 obtained by dividing the time-series data 2501 into two, the training data 251 including three pieces of time-series data 2511-1 to 2511-3 obtained by dividing the time-series data 2501 into three, and the training data 251 including four pieces of time-series data 2511-1 to 2511-4 obtained by dividing the time-series data 2501 into four, may be mixed. Moreover, the division number may be changed according to the length (time length from the tracking start time to the tracking end time) of the time-series data 2501 that is the source of the division. For example, as the time-series data 2501 is longer, the division number may be larger. Further, the training data 250 having the time-series data 2501 whose length is a threshold or shorter may not be selected as the generation source of the training data 251. Moreover, a plurality of pieces of time-series data 2511 constituting the training data 251 are not limited to that derived from the time-series data 2501 of the same floating object, but may be one derived from a plurality of pieces of time-series data 2501 of different floating objects in the same container 400. Furthermore, in order not to decrease the frequency of learning the time-series data 2501 depending on the source length, it is possible to include the time-series data 2501 before division in the training data 251.

Next, a method of learning the discriminative model 234 by the discriminative model learning unit 242 by using the training data 250 and the training data 251 will be described.

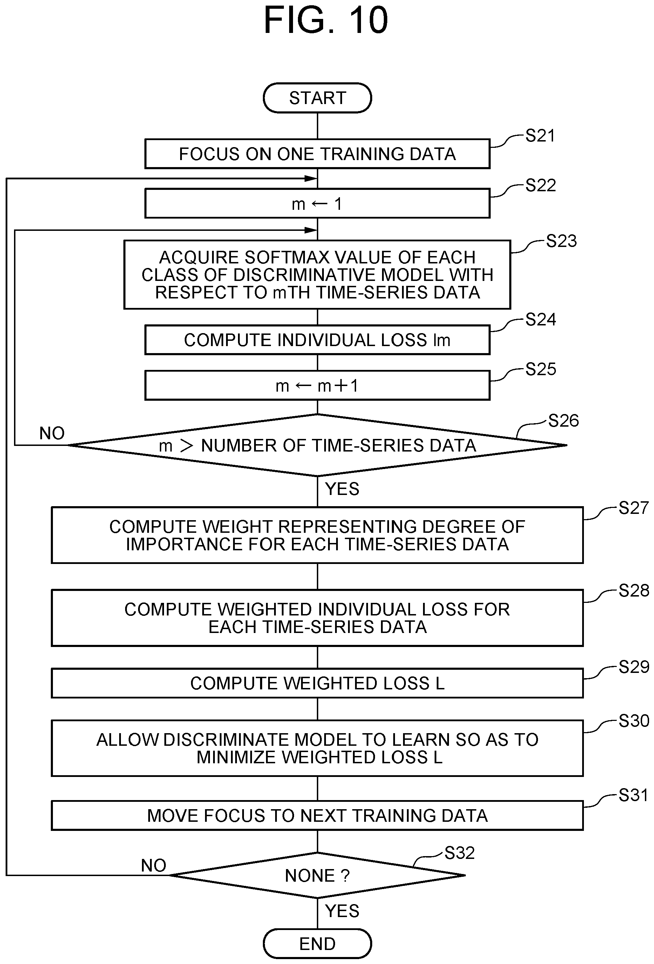

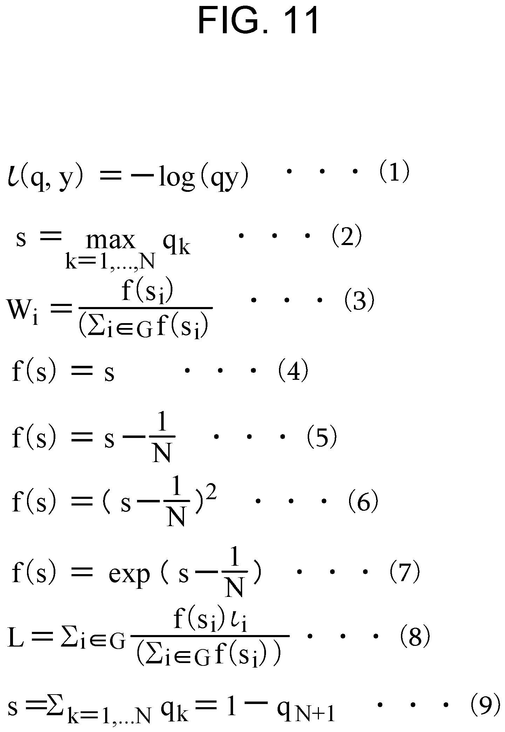

Fig. 10 is a flowchart illustrating an example of a learning process by the discriminative model learning unit 242. Referring to Fig. 10, the discriminative model learning unit 242 first focuses on one piece of training data in a training data group configured to include the training data 250 and the training data 251 (step S21). Then, the discriminative model learning unit 242 sets a value 1 to an internal variable m (step S22). Then, the discriminative model learning unit 242 acquires a softmax value of each class that is obtained as an output of the discriminative model 234 when the $m^{th}$ (m represents a value of an internal variable at that time, accordingly, 1 at the first time) time-series data included in the focused training data is input to the discriminative model 234 (step S23). Then, the discriminative model learning unit 242 computes an error between the correct label of the focused training data and the softmax value as an individual loss $l_m$ by using a previously given loss function (step S24). Here, as a loss function, cross entropy $l(q,y)=-log(qy)$ given by Expression 1 in Fig. 11 may be used. Note that in Expression 1, q represents an N component softmax value, and y represents a correct class component. Then, the discriminative model learning unit 242 increments the value of the internal variable m by 1 (step S25). Then, the discriminative model learning unit 242 determines whether or not the value of the internal variable m exceeds the number of pieces of time-series data included in the focused training data (step S26). When the value of the internal variable m does not exceed the number of pieces of time-series data, the discriminative model learning unit 242 returns to the processing of step S23, and repeats the same processing as described above on the next time-series data included in the focused training data. On the contrary, when the value of the internal variable m exceeds the number of pieces of time-series data, it means that acquisition of the softmax value for each class of the discriminative model 234 and computation of an individual loss have been performed for every time-series data included in the focused training data. In that case, the discriminative model learning unit 242 moves to the processing of step S27.

At step S27, the discriminative model learning unit 242 computes the weight representing the degree of importance for each piece of time-series data in the focused training data. For example, the discriminative model learning unit 242 determines that time-series data having a higher discrimination score has a higher degree of importance, and computes a larger weight. Specifically, the discriminative model learning unit 242 first computes a discrimination score s given by Expression 2 in Fig. 11, for each piece of time-series data included in the focused training data. That is, a discrimination score $s_i$ of the $i^{th}$ time-series data 2511-i is given by a maximum value of the N component softmax value q that is obtained when the time-series data 2511-i is input to the discriminative model 234. However, the discrimination score $s_i$ is not limited to that described above. For example, the discrimination score $s_i$ may be a softmax value of a correct class. Then, the discriminative model learning unit 242 computes a value of a strictly monotone increasing function f(s) (hereinafter simply referred to as a function f(s)) for each piece of time-series data. Then, the discriminative model learning unit 242 computes the sum of the values of the function f(s) of the entire time-series data. Then, for each piece of time-series data, the discriminative model learning unit 242 computes the rate of the value of the function f(s) of the time-series data with respect to the sum of the values of the function (f) of the entire time-series data, as a weight $w_i$ of the time-series data. That is, the weight of the $i^{th}$ time-series data 2511-i is given by Expression 3 in Fig. 11. In Expression 3, G represents a group consisting of time-series data in the focused training data. As described above, for each piece of time-series data, the discriminative model learning unit 242 computes a value obtained by normalizing the value of the function f(s) by the total value in the focused training data, as the weight w.

As the function f(s), Expression 4 in Fig. 11 may be used. Alternatively, Expression 5 in Fig. 11 may be used as the function f(s). Alternatively, Expression 6 in Fig. 11 may be used as the function f(s). Alternatively, Expression 7 may be used as the function f(s). With reference to the function f(s) of Expression 4, the function f(s) of Expression 5 has an effect of increasing the difference in weight between the data having a relatively low degree of importance and the data having a relatively high degree of importance. The function of Expression 6 has an effect of further increasing the difference in weight between the data having a relatively low degree of importance and the data having a relatively high degree of importance, more than the function f(s) of Expression 5. On the other hand, with reference to the function f(s) of Expression 4, the function f(s) of Expression 7 has an effect of decreasing the difference in weight between the data having a relatively low degree of importance and the data having a relatively high degree of importance.

Then, for each individual loss computed at step S24, the discriminative model learning unit 242 computes a weighted individual loss w•l by multiplying the individual loss by the corresponding weight computed at step S27 (step S28). Then, the discriminative model learning unit 242 computes the sum of all weighted individual losses as a weighted loss L of the training data (step S29). The weighted loss L is given by Expression 8 in Fig. 11. By using the weight individual loss and the weighted loss L as described above, the following effects (A), (B), and (C) are achieved.

(A) A discrimination score of time-series data that is easily discriminated as a foreign object class, among the pieces of time-series data 2511-1 to 2511-3 (each corresponds to a piece of fragment data), tends to be higher in an early stage of learning. Therefore, an effect of increasing the degree of importance of such time-series data (fragment data corresponding to such time-series data) is achieved. The time-series data that is easily discriminated is data in which features serving as the basis for class discrimination are included significantly. For example, the dropping speed of a foreign object having a larger specific gravity is relatively fast, compared with that of the liquid in the container 400. Therefore, time-series data having a feature of dropping rapidly is an example of time-series data that is easily discriminated.

(B) Among the pieces of time-series data 2511-1 to 2511-3, time-series data in which features serving as the basis for discrimination of a foreign object class are not included sufficiently has a possibility of erroneously discriminated as a class other than a foreign object class, for example, a bubble class, in some cases. However, since the correct class of the training data partially including such time-series data is a foreign object class, data that gains a high discrimination score may often exist in other pieces of time-series data belonging to the same training data. Therefore, the degree of importance of the time-series data that is erroneously discriminated is relatively lowered, so that the loss is relatively decreased accordingly. As a result, there is an effect of lowering the discrimination score in the case of erroneous discrimination.

(C) Since the weighted individual loss and the weighted loss L are normalized by the weighted sum, not all of the pieces of time-series data 2511-1 to 2511-3 are underestimated.

Referring to Fig. 10 again, the discriminative model learning unit 242 then learns the discriminative model 234 so as to minimize the weighted loss L computed at step S29 (step S30). Specifically, the discriminative model learning unit 242 tunes parameters of the discriminative model 234 so as to decrease the weighted loss L by using, for example, a gradient descent method and backpropagation. Note that at step S30, the discriminative model learning unit 242 may learn the discriminative model 234 so as to minimize a weighted individual loss for each of the weighted individual losses $w_1 \cdot l_1$, $w_2 \cdot l_2$, and $w_3 \cdot l_3$, instead of the weighted loss L.

Upon completion of learning using the focused training data, the discriminative model learning unit 242 moves the focus to the next training data in the training data group (step S31). Then, the discriminative model learning unit 242 returns to step S22 via step S32, and repeats the same processing as that described above on the newly focused training data. Then, upon completion of focusing on every training data included in the training data group (YES at step S32), the discriminative model learning unit 242 ends the processing of Fig. 10.

Hereinafter, processing performed by the discriminative model learning unit 242 will be described in more detail, by using the training data 251 corresponding to the moving loci a1, a2, and a3 of foreign objects illustrated in Fig. 13 and the training data 250 corresponding to the moving locus A of a foreign object as examples. Note that the number of discrimination classes of the discriminative model 234 is three classes, namely, a foreign object class, a bubble class, and a noise class, for convenience of description. Further, softmax values of the three classes output from the discriminative model 234 are expressed as [softmax value of foreign object class, softmax value of bubble class, softmax value of noise class]. Furthermore, it is assumed that the time-series data 2511-1 of the training data 251 corresponds to the moving locus a1, the time-series data 2511-2 corresponds to the moving locus a2, and the time-series data 2511-3 corresponds to the moving locus a3, respectively.

First, learning using the training data 251 will be described.

The discriminative model learning unit 242 first acquires softmax values of the respective classes of the discriminative model 234 with respect to the time-series data 2511-1 corresponding to the moving locus a1 (step S23). The moving locus a1 includes some features of a foreign object that a foreign object having a heavy specific gravity moves downward. Therefore, it is expected that the softmax value of a foreign object class is larger than those of bubble and noise classes. Here, it is assumed that [0.5, 0.4, 0.1] is acquired. The discriminative model learning unit 242 computes the individual loss $l_1$ corresponding to the time-series data 2511-1 from the acquired softmax values and the correct label 2512 ([1, 0, 0] (step S24).

Then, the discriminative model learning unit 242 first acquires softmax values of the respective classes of the discriminative model 234 with respect to the time-series data 2511-2 corresponding to the moving locus a2 (step S23). The moving locus a2 includes some features of a bubble that it moves upward. Therefore, there is a possibility that the softmax value of a bubble class is larger than those of foreign object and noise classes. Here, it is assumed that [0.4, 0.5, 0.1] is acquired. The discriminative model learning unit 242 computes the individual loss $l_2$ corresponding to the time-series data 2511-2 from the acquired softmax values and the correct label 2512 ([1, 0, 0]) (step S24).

Then, the discriminative model learning unit 242 acquires softmax values of the respective classes of the discriminative model 234 with respect to the time-series data 2511-3 corresponding to the moving locus a3 (step S23). The moving locus a3 includes some features of a foreign object that it moves downward. Therefore, it is expected that the softmax value of a foreign object class is sufficiently larger than those of bubble and noise classes. Here, it is assumed that [0.8, 0.1, 0.1] is acquired. The discriminative model learning unit 242 computes the individual loss $l_3$ corresponding to the time-series data 2511-3 from the acquired softmax values and the correct label 2512 ([1, 0, 0]) (step S24).

Then, the discriminative model learning unit 242 computes the weights $w_1$, $w_2$, and $w_3$ of the time-series data 2511-1 to 2511-3, respectively (step S27).

In the case of using the function f(s) of Expression 4 in Fig. 11, $w_1 \approx 0.278$, $w_2 \approx 0.278$, and $w_3 \approx 0.444$ are obtained. In the case of using the function f(s) of Expression 5 in Fig. 11, $w_1 \approx 0.208$, $w_2 \approx 0.208$, and $w_3 \approx 0.583$ are obtained. In the case of using the function f(s) of Expression 6 in Fig. 11, $w_1 \approx 0.102$, $w_2 \approx 0.102$, and $w_3 \approx 0.795$ are obtained. In the case of using the function f(s) of Expression 7 in Fig. 11, $w_1 \approx 0.299$, $w_2 \approx 0.299$, and $w_3 \approx 0.403$ are obtained.

Then, the discriminative model learning unit 242 computes the weighted loss L for the training data 251 (step S28). For example, in the case of using the function f(s) of Expression 5 in Fig. 11, $L = 0.208 \cdot l_1 + 0.208 \cdot l_2 + 0.583 \cdot l_3$ is obtained.

Then, the discriminative model learning unit 242 learns the discriminative model 234 so as to minimize the weighted loss L (step S30). Here, in the weighted loss L, the weight of the individual loss $l_3$ of the time-series data 2511-3 is larger, and the weights of the individual losses $l_1$ and $l_2$ of the time-series data 2511-1 and 2511-2 are smaller. Therefore, the time-series data 2511-3 significantly having features of a foreign object is learned with a larger weight, and the time-series data 2511-2 having features of a bubble that is erroneously discriminated and the time-series data 2511-1 having a small amount of features of a foreign object are learned with a small weight. As a result, the discriminative model 234 can be learned so as to expand the difference between the discrimination score by which a fragmented moving locus c1 of a bubble similar to the moving locus a1 (corresponding to the time-series data 2511-1) as illustrated in Fig. 13 is discriminated as a foreign object and the discrimination score by which a fragmented moving locus c2 of a bubble similar to the moving locus a2 (corresponding to the time-series data 2511-2) is discriminated as a foreign object, and the discrimination score by which the moving locus B of a foreign object similar to the moving locus a3 (corresponding to the time-series data 2511-3) is discriminated as a foreign object.

On the contrary, in the case of learning the respective pieces of time-series data 2511-1 to 2511-3 as foreign objects without being weighted, it is difficult to learn the discriminative model 234 so as to expand the difference between the discrimination score by which the fragmented moving locus c1 of a bubble similar to the moving locus a1 (corresponding to the time-series data 2511-1) is discriminated as a foreign object and the discrimination score by which the fragmented moving locus c2 of a bubble similar to the moving locus a2 (corresponding to the time-series data 2511-2) is discriminated as a foreign object, and the discrimination score by which the moving locus B of a foreign object similar to the moving locus a3 (corresponding to the time-series data 2511-3) is discriminated as a foreign object. As a result, there is a high possibility that the fragmented moving loci c1 and c2 of a bubble are erroneously detected as foreign objects with high discrimination scores.

Next, learning by using the training data 250 will be described. The training data 250 includes only one piece of time-series data 2501.

The discriminative model learning unit 242 first acquires softmax values of the respective classes of the discriminative model 234 with respect to the time-series data 2511 (step S23). The moving locus A of a foreign object includes features of a foreign object that a foreign object having a heavy specific gravity finally moves downward. Therefore, it is expected that the softmax value of a foreign object class is larger than those of bubble and noise classes. Here, it is assumed that [0.7, 0.2, 0.1] is acquired. The discriminative model learning unit 242 computes the individual loss $l_1$ corresponding to the time-series data 2511 from the acquired softmax values and the correct label 2502 ([1, 0, 0]) (step S24).

Then, the discriminative model learning unit 242 computes the weight $w_1$ of the time-series data 2511 (step S27). Since only one piece of time-series data is included in the training data 250, the weight takes 1.

Then, the discriminative model learning unit 242 computes the weighted loss L for the training data 250 (step S28). As a result, $L=l_1$ is obtained.

Then, the discriminative model learning unit 242 learns the discriminative model 234 so as to minimize the weighted loss L (step S29).

According to the discriminative model learning unit 242 that is configured and operates as described above, even in the case where data representing a fragmented moving locus of a foreign object is input, it is possible to gain the learned discriminative model 234 that can correctly discriminate the class of the foreign object. The reason thereof is that the discriminative model learning unit 242 learns the discriminative model 234 by using a plurality of pieces of time-series data 2511-1 to 2511-3 belonging to the training data 251 assuming fragmentation.

Moreover, according to the discriminative model learning unit 242, it is possible to gain the learned discriminative model 234 that hardly causes erroneous discrimination with a high score (overconfidence). The reason thereof is that the discriminative model learning unit 242 computes the discrimination score corresponding to each of a plurality of pieces of time-series data 2511 belonging to one piece of training data 251 (corresponding to the group) by using the discriminative model 234, and learns the discriminative model 234 by using the weighted loss function L that is a loss function depending on the relative height of the discrimination score in the training data 251.

Next, the details of the determination unit 243 will be described.

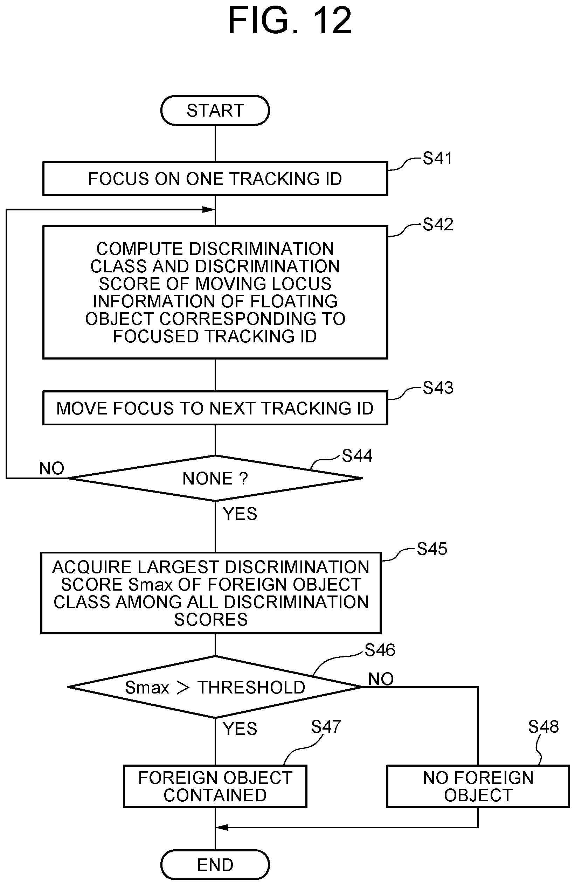

Fig. 12 is a flowchart illustrating an example of processing performed by the determination unit 243. At the point of time that the determination unit 243 starts processing illustrated in Fig. 12, the tracking information 233 including the time-series data representing the moving locus of a foreign object existing in the liquid enclosed in the container 400 to be inspected is stored in the storage unit 230. In the tracking information 233, the tracking ID 2332 of each floating object and the moving locus information 2334 corresponding to the tracking ID 2332 one to one are stored, as described with reference to Fig. 4.

Referring to Fig. 12, the determination unit 243 focused on one tracking ID in the tracking information 233 of the container 400 to be inspected (step S41). Then, the determination unit 243 acquires the discrimination class and the discrimination score of the floating object, from the softmax value of each class that is output when the moving locus information 2334 of the floating object corresponding to the focused tracking ID is input to the learned discriminative model 234 (step S42). For example, among the three classes namely a foreign object class, a bubble class, and a noise class, when the softmax value of the foreign object class is the largest and the value thereof is 0.8 for example, the determination unit 243 acquires that the floating object class is a foreign object class and the discrimination score is 0.8. Then, the determination unit 243 moves the focus to the next tracking ID in the tracking information 233 (step S43). Then, the determination unit 243 returns to step S42 via step S44, and repeats the same processing as that described above on the moving locus information 2334 of a floating object corresponding to the newly focused tracking ID. Then, upon completion of focusing on all tracking IDs in the tracking information 233 (YES at step S44) the determination unit 243 proceeds to the processing of step S45.

At step S45, the determination unit 243 acquires a largest discrimination score $s_{max}$ among all discrimination results computed at step S42. Then, the determination unit 243 compares the discrimination score $s_{max}$ with a predetermined determination threshold $s_{th}$, and when the discrimination score $s_{max}$ is larger than the determination threshold $s_{th}$, the determination unit 243 creates the inspection result information 235 indicating that a foreign object is mixed in the inspected container 400 (step S47). On the contrary, when the discrimination score $s_{max}$ is not larger than the determination threshold $s_{th}$, the determination unit 243 creates the inspection result information 235 indicating that no foreign object is mixed in the inspected container 400 (step S48).

As described above, according to the inspection system 100 of the present embodiment, it is possible to inspect presence or absence of a foreign object in the liquid enclosed in the container 400 with high accuracy. This is because inspection is performed by using the learned discriminative model 234 that is resistant to fragmentation and less likely to cause erroneous discrimination with a high score.

Next, modifications of the present embodiment will be described.

<Modification 1>

In the case of using the function f(s)=s illustrated in Fig. 11, the discriminative model 234 of the discrimination class number N may have an extra $N+1^{th}$ softmax component. The discrimination score s may be determined depending on the lowness of a value $q_{N+1}$ of the extra softmax component. That is, the discrimination score s may be computed by using Expression 9 in Fig. 11. In this modification, the discriminative model 234 is learned so as to enlarge the value of the extra softmax component in such a degree that the discriminative model 234 is not confident in to which class an object is to be classified. As a result, in the case of discriminating whether or not an object is a foreign object, the discrimination score s in the case where the discriminative model 234 estimates whether or not an object is a foreign object is half-and half with high confidence can be higher than the discrimination score s in the case where the discriminative model 234 outputs whether or not an object is a foreign object is half-and half because the discriminative model 234 has no confidence.

<Modification 2>

In the embodiment described above, for each piece of training data, the discriminative model learning unit 242 allows the discriminative model 234 to learn so as to minimize the weighted loss L corresponding thereto. However, for each set of two or more pieces of training data, it is also possible to allow the discriminative model 234 to learn so as to minimize the average loss of the weighted loss L computed for each piece of training data belonging thereto.

<Modification 3>

In the above description, the present invention has been applied to learning of a discriminative model for discriminating the class of a floating object from time-series data representing the moving locus of the floating object in the liquid. However, application of the present invention is not limited to a discriminative model of this type. For example, the present invention may be applied to learning of a discriminative model that determines whether or not a person shown on video data is a suspicious person, from the motion of the person. Alternatively, the present invention may be applied to learning of a discriminative model that detects an abnormality of an information processing device from any time-series data collected from the information processing device such as a computer. Alternatively, the present invention may be applied to learning of a discriminative model that discriminates the class of an object shown on a still image.

[Second Example Embodiment]

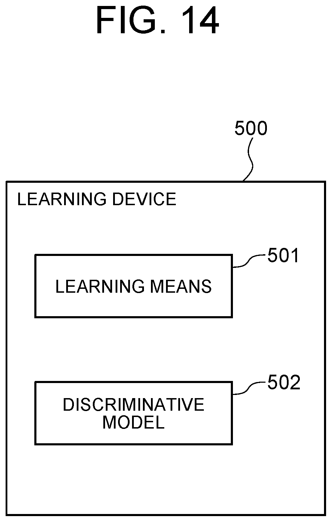

Fig. 14 is a block diagram of a learning device 500 according to a second example embodiment of the present invention. Referring to Fig. 14, the learning device 500 includes a learning means 501.

The learning means 501 is configured to learn a discriminative model 502 that discriminates a class to which second data, corresponding to an unknown object, belongs, by using first training data that includes a group including a plurality of pieces of first data corresponding to the same object and a first data label with respect to the group. The learning means 501 is also configured to compute a discrimination score with respect to the first data by using the discriminative model 502 in the learning, and learns the discriminative model 502 by using a loss weighted by a weight that depends on the relative height of the discrimination score in the group. The learning means 501 may be configured similarly to the discriminative model learning unit 242 of Fig. 2 for example, but is not limited thereto.

The learning device 500 configured as described above operates as described below. The learning means 501 learns the discriminative model 502 that discriminates a class to which second data, corresponding to an unknown object, belongs, by using first training data that includes a group including a plurality of pieces of first data corresponding to the same object and a first data label with respect to the group. In the learning, the learning means 501 computes a discrimination score with respect to the first data by using the discriminative model 502. Then, the learning means 501 computes a weight that depends on the relative height of the discrimination score in the group. Then, the learning means 501 computes a loss that is weighted by using the computed weight. Then, the learning means 501 learns the discriminative model 502 by using the weighted loss.

According to the learning device 500 that is configured and operates as described above, it is possible to gain the learned discriminative model 502 that is resistant to fragmentation and is less likely to generate erroneous discrimination with a high score. This is because the learning means 501 computes a discrimination score with respect to the first data by using the discriminative model 502, and learns the discriminative model 502 by using a loss weighted by a weight that depends on the relative height of the discrimination score in the group.

While the present invention has been described with reference to the exemplary embodiments described above, the present invention is not limited to the above-described embodiments. The form and details of the present invention can be changed within the scope of the present invention in various manners that can be understood by those skilled in the art.

INDUSTRIAL APPLICABILITY

The present invention is applicable to the field of learning a discriminative model in general.

The whole or part of the exemplary embodiments disclosed above can be described as, but not limited to, the following supplementary notes.

(Supplementary Note 1)

A learning device comprising

learning means for learning a discriminative model that discriminates a class to which second data belongs, the second data being data corresponding to an unknown object, by using first training data that includes a group including a plurality of pieces of first data corresponding to a same object, and a first data label with respect to the group, wherein the learning means computes a discrimination score with respect to the first data by using the discriminative model, and learns the discriminative model by using a loss weighted by a weight that depends on a relative height of the discrimination score in the group.

(Supplementary Note 2)

The learning device according to supplementary note 1, wherein
the learning means includes a data conversion means for receiving input of second training data that includes third data corresponding to an object and a second data label with respect to the third data, and generating the first training data from a plurality of pieces of partial data obtained by dividing the third data into a plurality of pieces and from the second data label.

(Supplementary Note 3)

The learning device according to supplementary note 1 or 2, wherein
the learning means is configured to compute a value obtained by normalizing a strictly monotone increasing function f(s) of the discrimination score with respect to the first data by a total value in the group, as a weight of the first data.

(Supplementary Note 4)

The learning device according to supplementary note 3, wherein

the strictly monotone increasing function f(s) satisfies

$$f(s)=s-1/N$$

where s represents the discrimination score, and N represents a number of discrimination classes of the discriminative model.

(Supplementary Note 5)

The learning device according to supplementary note 3, wherein

the strictly monotone increasing function f(s) satisfies

$$f(s)=(s-1/N)^2$$

where s represents the discrimination score, and N represents a number of discrimination classes of the discriminative model.

(Supplementary Note 6)

The learning device according to supplementary note 3, wherein

the strictly monotone increasing function f(s) satisfies

$$f(s)=\exp(s-1/N)$$

where s represents the discrimination score, and N represents a number of discrimination classes of the discriminative model.

(Supplementary Note 7)

The learning device according to any of supplementary notes 1 to 6, wherein
when N represents a number of discrimination classes of the discriminative model, the learning means computes the discrimination score by using a maximum value of a softmax output of an N component of the discriminative model.

(Supplementary Note 8)

The learning device according to any of supplementary notes 1 to 6, wherein
the discriminative model has a specific softmax output in which learning is performed so as to increase a value when there is no confidence in a class to be taken, and the learning means computes the discrimination score by using a degree of lowness of the specific softmax output.

(Supplementary Note 9)

The learning device according to any of supplementary notes 1 to 8, wherein
the first data is time-series data.

(Supplementary Note 10)

The learning device according to any of supplementary notes 1 to 9, wherein
the first data is time-series data representing a moving locus of an object obtained by observation.

(Supplementary Note 11)

A learning device configured to:

learn a discriminative model that discriminates a class to which second data belongs, the second data being data corresponding to an unknown object, by using first training data that includes a group including a plurality of pieces of first data corresponding to a same object, and a first data label with respect to the group;
in the learning, compute a discrimination score with respect to the first data by using the discriminative model;

compute a weight that depends on a relative height of the discrimination score in the group;

compute a loss weighted by using the computed weight; and

learn the discriminative model by using the weighted loss.

(Supplementary Note 12)

A computer-readable medium storing thereon a program for causing a computer to execute processing to:

learn a discriminative model that discriminates a class to which second data belongs, the second data being data corresponding to an unknown object, by using first training data that includes a group including a plurality of pieces of first data corresponding to a same object, and a first data label with respect to the group, wherein

the learning includes processing to:

compute a discrimination score with respect to the first data by using the discriminative model;

compute a weight that depends on a relative height of the discrimination score in the group;

compute a loss weighted by using the computed weight; and

learn the discriminative model by using the weighted loss.

REFERENCE SIGNS LIST

| 100 | inspection system |
| 110 | holding device |
| 120 | illumination device |
| 130 | camera device |
| 200 | inspection device |
| 300 | display device |
| 400 | container |
| 401 | cap |

**Claims**

1. A learning device comprising

learning means for learning a discriminative model that discriminates a class to which second data belongs, the second data being data corresponding to an unknown object, by using first training data that includes a group including a plurality of pieces of first data corresponding to a same object, and a first data label with respect to the group, wherein

the learning means computes a discrimination score with respect to the first data by using the discriminative model, and learns the discriminative model by using a loss weighted by a weight that depends on a relative height of the discrimination score in the group.

2. The learning device according to claim 1, wherein the learning means includes a data conversion means for receiving input of second training data that includes third data corresponding to an object and a second data label with respect to the third data, and generating the first training data from a plurality of pieces of partial data obtained by dividing the third data into a plurality of pieces and from the second data label.

3. The learning device according to claim 1 or 2, wherein

the learning means is configured to compute a value obtained by normalizing a strictly monotone increasing function f(s) of the discrimination score with respect to the first data by a total value in the group, as a weight of the first data.

4. The learning device according to claim 3, wherein

the strictly monotone increasing function f(s) satisfies

$$f(s)=s-1/N$$

where s represents the discrimination score, and N represents a number of discrimination classes of the discriminative model.

5. The learning device according to claim 3, wherein

the strictly monotone increasing function f(s) satisfies

$$f(s)=(s-1/N)^2$$

where s represents the discrimination score, and N represents a number of discrimination classes of the discriminative model.

6. The learning device according to claim 3, wherein

the strictly monotone increasing function f(s) satisfies

$$f(s)=\exp(s-1/N)$$

where s represents the discrimination score, and N represents a number of discrimination classes of the discriminative model.

7. The learning device according to any of claims 1 to 6, wherein
when N represents a number of discrimination classes of the discriminative model, the learning means computes the discrimination score by using a maximum value of a softmax output of an N component of the discriminative model.

8. The learning device according to any of claims 1 to 6, wherein
the discriminative model has a specific softmax output in which learning is performed so as to increase a value when there is no confidence in a class to be taken, and the learning means computes the discrimination score by using a degree of lowness of the specific softmax output.

9. The learning device according to any of claims 1 to 8, wherein
the first data is time-series data.

10. The learning device according to any of claims 1 to 9, wherein
the first data is time-series data representing a moving locus of an object obtained by observation.

11. A learning device configured to:

  learn a discriminative model that discriminates a class to which second data belongs, the second data being data corresponding to an unknown object, by using first training data that includes a group including a plurality of pieces of first data corresponding to a same object, and a first data label with respect to the group;
  in the learning, compute a discrimination score with respect to the first data by using the discriminative model;
  compute a weight that depends on a relative height of the discrimination score in the group;
  compute a loss weighted by using the computed weight; and
  learn the discriminative model by using the weighted loss.

12. A computer-readable medium storing thereon a program for causing a computer to execute processing to:

  learn a discriminative model that discriminates a class to which second data belongs, the second data being data corresponding to an unknown object, by using first training data that includes a group including a plurality of pieces of first data corresponding to a same object, and a first data label with respect to the group, wherein
the learning includes processing to:

  compute a discrimination score with respect to the first data by using the discriminative model;
  compute a weight that depends on a relative height of the discrimination score in the group;
  compute a loss weighted by using the computed weight; and
  learn the discriminative model by using the weighted loss.

# FIG. 1

<u>100</u>  INSPECTION SYSTEM

# FIG. 2

200 INSPECTION DEVICE

240 ARITHMETIC PROCESSING UNIT

210 COMMUNICATION I/F UNIT

241 ACQUISITION UNIT

242 DISCRIMINATIVE MODEL LEARNING UNIT

243 DETERMINATION UNIT

110 HOLDING DEVICE

130 CAMERA DEVICE

300 DISPLAY DEVICE

220 OPERATION INPUT UNIT

230 STORAGE UNIT

232 IMAGE INFORMATION

233 TRACKING INFORMATION

234 DISCRIMINATIVE MODEL

235 INSPECTION RESULT INFORMATION

236 PROGRAM

# FIG. 3

232 IMAGE INFORMATION

2321  2322   2323

| CONTAINER ID | IMAGING TIME | FRAM IMAGE |
|---|---|---|
| | • • • | |

# FIG. 4

2334 MOVING LOCUS INFORMATION

233 TRACKING INFORMATION

| TIME | POSITION INFORMATION | SIZE | COLOR | SHAPE |
|------|----------------------|------|-------|-------|
| TIME | POSITION INFORMATION | SIZE | COLOR | SHAPE |
| | | • • • | | |

23341  23342  23343  23344  23345

2332  2331

| CONTAINER ID | |
|--------------|--------------|
| TRACKING ID | POINTER |
| TRACKING ID | POINTER |
| • • • | |

2333

# FIG. 5

235 INSPECTION RESULT INFORMATION

| | |
|---|---|
| CONTAINER ID | 2351 |
| INSPECTION RESULT（OK／NG） | 2352 |

# FIG. 6

```
                    ┌─────────────┐
                    │    START    │
                    └──────┬──────┘
                           │
        ┌──────────────────────────────────────┐  ⌒S1
        │      ACQUIRE IMAGE INFORMATION        │
        └──────────────────┬───────────────────┘
                           │
        ┌──────────────────────────────────────┐  ⌒S2
        │     ACQUIRE TRACKING INFORMATION      │
        └──────────────────┬───────────────────┘
                           │
        ┌──────────────────────────────────────┐  ⌒S3
        │          CREATE TRAINING DATA         │
        └──────────────────┬───────────────────┘
                           │
        ┌──────────────────────────────────────┐  ⌒S4
        │       LEARN DISCRIMINATIVE MODEL      │
        └──────────────────┬───────────────────┘
                           │
                    ┌─────────────┐
                    │     END     │
                    └─────────────┘
```

# FIG. 7

```
        ( START )
            |
            |
  ┌─────────────────────────────────┐
  │   ACQUIRE IMAGE INFORMATION      │──── S11
  └─────────────────────────────────┘
            |
  ┌─────────────────────────────────┐
  │  ACQUIRE TRACKING INFORMATION    │──── S12
  └─────────────────────────────────┘
            |
  ┌─────────────────────────────────┐
  │ DISCRIMINATE FLOATING OBJECT CLASS│──── S13
  └─────────────────────────────────┘
            |
  ┌─────────────────────────────────┐
  │    OUTPUT INSPECTION RESULT      │──── S14
  └─────────────────────────────────┘
            |
         ( END )
```

# FIG. 8

250 TRAINING DATA

| | |
|---|---|
| TIME-SERIES DATA | 2501 |
| CORRECT LABEL | 2502 |

251 TRAINING DATA

2511-1    2511-2    2511-3

| TIME-SERIES DATA | TIME-SERIES DATA | TIME-SERIES DATA | |
|---|---|---|---|
| CORRECT LABEL | | | 2512 |

# FIG. 9

250 TRAINING DATA

| | |
|---|---|
| TIME-SERIES DATA | 2501 |
| CORRECT LABEL | 2502 |

⬇ 2421

SELECTION UNIT

250' TRAINING DATA

⬇

| | |
|---|---|
| TIME-SERIES DATA | 2501 |
| CORRECT LABEL | 2502 |

⬇ 2422

DATA CONVERSION UNIT

⬇

251 TRAINING DATA

2511-1     2511-2     2511-3

| TIME-SERIES DATA | TIME-SERIES DATA | TIME-SERIES DATA |
|---|---|---|
| CORRECT LABEL | | 2512 |

# FIG. 10

```
                    START

                    FOCUS ON ONE TRAINING DATA          ──S21

                    m ← 1                                ──S22

                    ACQUIRE SOFTMAX VALUE OF EACH        ──S23
                    CLASS OF DISCRIMINATIVE MODEL WITH
                    RESPECT TO mTH TIME-SERIES DATA

                    COMPUTE INDIVIDUAL LOSS lm           ──S24

                    m ← m＋1                              ──S25

        NO                                               ──S26
               m ＞ NUMBER OF TIME-SERIES DATA

                          YES

                    COMPUTE WEIGHT REPRESENTING DEGREE OF    ──S27
                    IMPORTANCE FOR EACH TIME-SERIES DATA

                    COMPUTE WEIGHTED INDIVIDUAL LOSS FOR     ──S28
                    EACH TIME-SERIES DATA

                    COMPUTE WEIGHTED LOSS L                  ──S29

                    ALLOW DISCRIMINATE MODEL TO LEARN SO AS TO   ──S30
                    MINIMIZE WEIGHTED LOSS L

                    MOVE FOCUS TO NEXT TRAINING DATA         ──S31

        NO                                               ──S32
                    NONE ?

                          YES

                    END
```

# FIG. 11

$$\mathcal{L}(q, y) = -\log(qy) \quad \cdot \quad \cdot \quad \cdot \quad (1)$$

$$s = \max_{k=1,\ldots,N} q_k \quad \cdot \quad \cdot \quad \cdot \quad (2)$$

$$W_i = \frac{f(s_i)}{(\Sigma_{i \in G} f(s_i)} \quad \cdot \quad \cdot \quad \cdot \quad (3)$$

$$f(s) = s \quad \cdot \quad \cdot \quad \cdot \quad (4)$$

$$f(s) = s - \frac{1}{N} \quad \cdot \quad \cdot \quad \cdot \quad (5)$$

$$f(s) = (s - \frac{1}{N})^2 \quad \cdot \quad \cdot \quad \cdot \quad (6)$$

$$f(s) = \exp(s - \frac{1}{N}) \quad \cdot \quad \cdot \quad \cdot \quad (7)$$

$$L = \Sigma_{i \in G} \frac{f(s_i) \mathcal{L}_i}{(\Sigma_{i \in G} f(s_i))} \quad \cdot \quad \cdot \quad \cdot \quad (8)$$

$$s = \Sigma_{k=1,\ldots N} q_k = 1 - q_{N+1} \quad \cdot \quad \cdot \quad \cdot \quad (9)$$

# FIG. 12

START

FOCUS ON ONE TRACKING ID — S41

COMPUTE DISCRIMINATION CLASS AND DISCRIMINATION SCORE OF MOVING LOCUS INFORMATION OF FLOATING OBJECT CORRESPONDING TO FOCUSED TRACKING ID — S42

MOVE FOCUS TO NEXT TRACKING ID — S43

NO ◇ NONE ? — S44

YES

ACQUIRE LARGEST DISCRIMINATION SCORE $S_{max}$ OF FOREIGN OBJECT CLASS AMONG ALL DISCRIMINATION SCORES — S45

◇ $S_{max} >$ THRESHOLD — S46    NO

YES    S47

FOREIGN OBJECT CONTAINED    S48    NO FOREIGN OBJECT

END

# FIG. 13

A FOREIGN
OBJECT

FRAGMENTATION

a1

a2

a3

B FOREIGN
OBJECT

C BUBBLE

FRAGMENTATION

c1

c2

# FIG. 14

500

**LEARNING DEVICE**

LEARNING MEANS — 501

DISCRIMINATIVE MODEL — 502

## INTERNATIONAL SEARCH REPORT

| International application No. |
|---|
| **PCT/JP2021/035124** |

### A.    CLASSIFICATION OF SUBJECT MATTER

*G06N 20/00*(2019.01)i
FI:    G06N20/00

According to International Patent Classification (IPC) or to both national classification and IPC

### B.    FIELDS SEARCHED

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | JP 2020-149601 A (NTT COMMUNICATIONS CORPORATION) 17 September 2020 (2020-09-17) entire text | 1-12 |
| A | JP 2021-033544 A (HITACHI, LIMITED) 01 March 2021 (2021-03-01) entire text | 1-12 |
| A | CN 112598311 A (AGRICULTURAL BANK CHINA) 02 April 2021 (2021-04-02) entire text | 1-12 |

☐ Further documents are listed in the continuation of Box C.            ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 November 2021** | **07 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/035124**

| Patent document cited in search report | | | Publication date (day/month/year) | Patent family member(s) | Publication date (day/month/year) |
|---|---|---|---|---|---|
| JP | 2020-149601 | A | 17 September 2020 | (Family: none) | |
| JP | 2021-033544 | A | 01 March 2021 | (Family: none) | |
| CN | 112598311 | A | 02 April 2021 | (Family: none) | |

Form PCT/ISA/210 (patent family annex) (January 2015)

**EP 4 407 527 A1**

**Patent documents cited in the description**

- JP 2019174346 A